# EUROPEAN PATENT APPLICATION

(11) **EP 2 538 541 A1**
(43) Date of publication of application: **26.12.2012**
(21) Application number: 12386018.1
(22) Date of filing: 20.06.2012
(51) Int. Cl.: H02M 5/458, H02M 1/42, H05B 33/08, H02M 1/12

(54) **Method for stability and dimming of luminosity of lamps and illumination bodies having LED elements**

(30) Priority: 22.06.2011 GR 20110100369
(71) Applicant: Electron Emporiki Kai Kataskeuastiki Ilektronikon Kai Ilektrikon Eidon Anonymi Viotechniki Kai Emporiki Etairia with d.t. "Electron A.V.E.E.", 14341 Filadelphias-Chalkidona (GR)
(72) Inventor: Ioannis, Nikolaou, 15234 Chalandri (GR)

(57) **Abstract**

The present invention relates to a method providing luminosity stability and dimming of lamps and illumination bodies with LED elements, which is performed by the use of electronic circuits controlled by a central controller (4), where at first the alternating voltage of the mains is converted to the direct one and at the same time it is rectified by an AC/DC converter (1), thereafter it is guided to a digital-to-analog converter (2), where it is converted to constant positive sinusoidal and finally to a controlled bridge (3) which converts it to alternating one. Due to the use of an electromagnetic interference filter (7), the noise is removed from the circuit while in parallel the power coefficient is also corrected. The method supports a control of the adjustment of the luminosity both by "reversed phase" and by "forward phase", depending on the user's selection.

## Description

The present invention relates to a method providing stability and dimming of lamps and illumination bodies using LED elements.

Recently, companies manufacturing light emission diodes, widely known as LEDs, have made large progression and provide diodes having a power of 100W. While in the past the LEDs were mainly used as decorative elements, they are now used as main light source. In the market there are LED products operating with mains voltage of 230 VAC, whereas there are types operating under 120 VAC or even under a voltage of 12 VAC. At the same time, there are lamps in which their luminosity is adjustable as long as they are connected to dimmer devices.

Lamps having LEDs present various advantages, since their lifetime is of the order of 35000-50000 hours compared to the incandescent lamps having a lifetime of 2000 hours and the fluorescent lamps having a lifetime between 10000 to 15000 hours. Furthermore, their size is considerably small, of the order of 2 mm, while as solid-state elements they are resistant to vibrations, contrary to incandescent lamps and fluorescent lamps. They produce cold light and thus they are not dangerous for items sensitive to infrared light while in parallel they do not contain mercury as the fluorescent lamps. However the major advantage of the LEDs is that they consume less energy than the conventional incandescent lamps for the same luminosity power. A negative feature is the sensibility to fluctuations of the current supplying these, resulting to variation of the flux of the LED. Since the LED operate being supplied from the mains to which devices with various consumptions, power coefficients and continuous voltage variations are connected, the sinusoidal alternating voltage of the mains is excessively loaded and loses stability. This effect, which can be easily observed via a voltage meter, causes instability and flickering both on the conventional illumination bodies with LED and to those with adjustable luminosity.

The operation of the luminosity adjustment devices, known as dimmers, is based on TRIAC or IGBT elements, which are driven by the electric circuit of the dimmer and change their conduction angle, so that on the dimmer output, to which the adjustable illumination bodies with LED have been connected, a part of the period of the sinusoidal voltage is provided. As conduction angle, the degrees of the period of in which the TRIAC or IGBT is conductive is defined, i.e. the part of the semiperiod of the mains voltage in which the illumination bodies with LEDs are supplied and thus in this way their luminosity is adjusted. The problem lies in that TRIACs and IBGTs, when conducting, operate as switches and thus the variations of the mains are carried to the illumination bodies.

Irrespective of whether the illumination bodies with LEDs are connected via a dimmer or directly to the mains, the flickering problem due to fluctuations is not obviated. On the contrary, it is more intense when the adjustment of the current density is low, since any variation may be more apparent by the human eye. Thus a more effective way is desired which will allow a combination of a modern technology, such as LEDs, which is however sensitive to voltage fluctuations, with an unstable mains.

The proposed invention solves the above problems while in parallel it presents various advantages which make it ideal for widespread use. The method for stability and dimming of luminosity of lamps is realized by the use of an electronic circuit, which at its output provides a constantly alternating sinusoidal voltage, which remains unaffected by any variation in voltage, frequency or distortion of the mains, while in parallel has an adjustable conduction angle. In this way, a constant alternating sinusoidal voltage is output, which has a frequency of 50 or 60 Hz, under mains voltage variations from 150V AC to 265V AC for 230V mains and from 80V AC to 140V AC for 120V mains, while in parallel the luminosity on illumination bodies with LEDs can be adjusted. At the same time, the output voltages of the circuit may vary depending on the individual needs, and its power coefficient is larger than 0.98. Thus, lamps and illumination bodies with LEDs are obtained the luminosity of which is constant and with no flickering, irrespective of their luminosity level, with different operation voltages and with luminosity adjustability either by reverse phase control or by forward phase control. Furthermore, the conduction angle is constant and thus not only in relation to the 0V of the period but also in relation to the time of the output period. Furthermore, the output remains unaffected by distortions in mains voltage, which is shifted to 0V of the period, as well as by overvoltages, which may cause damage to lamps and illumination bodies with LEDs and influence the conduction angles thereof. These and other features and advantages of the present invention will be fully apparent by the following detailed description. The invention will be fully understood with reference to the accompanying figures, which show an exemplary embodiment thereof.
Figures 1(a), (b), (c) show the waveform of a typical supply mains, the output of a conventional dimmer as well as the output of a dimmer applying the method described herein, respectively.
Figures 2(a), (b) show types of distortions and how these affect the output of a conventional dimmer, whereas figure 2(c) shows the output of a dimmer using the method described herein.
Figures 3(a), (b), (c) show the rectified direct voltage, the stabilized positive sinusoidal waveform and the sinusoidal waveform as derived from the various stages of the method.
Figure 4 shows a block diagram of the electronic circuits of the method, whereas figure 5 shows the electronics incorporated along with the other circuits required for the application of the method on a dimmer.
Figure 6 shows an electromagnetic interference filter, and figure 7 shows an AC/DC converter used for the application of the method.
Figure 8 shows in detail a low-power supply unit used for the circuits of the dimmer elements which require low operation voltage.
Figure 9 shows in detail the inner circuit of the digital-to-analog converter used in the method as well as the obtained waveform at its output, and figure 10 shows the high-control and low-control inputs on the integrated circuit of the converter as well as its output.
Figure 11 shows the circuits of the controlled bridge used for the application of the method.
Figure 12(a) and (b) show the output waveforms under reversed-phase control and forward-phase control respectively.
Figures 13(a), (b) and (c) present the output waveforms of a dimmer in which the present method has been used and which uses a reversed-phase control with signal control levels 128, 256 and 384, and figures 14(a), (b), (c) show the respective waveforms when the forward-phase control with the same signal control levels has been used.

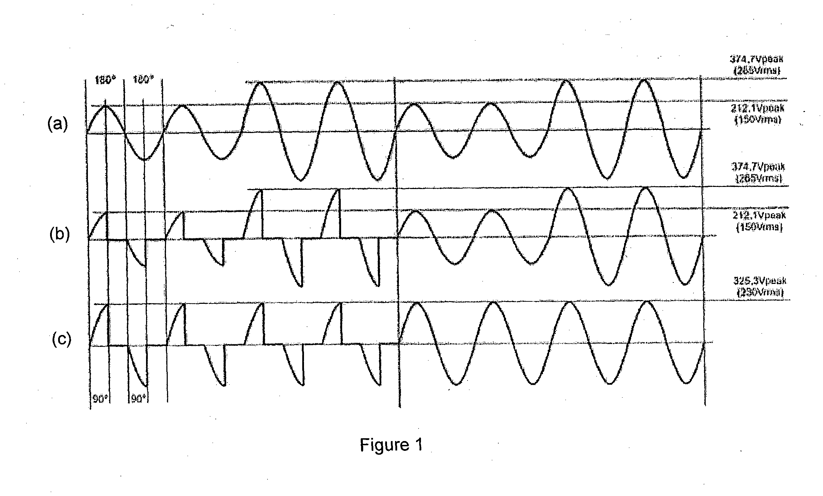

The waveform of the voltage of a typical mains, figure 1(a), presents intense fluctuations in its width, so that distortions are presented at the output of a conventional dimmer, thereby affecting its efficiency, as it is apparent from the 2^{nd} waveform, figure 1(b). On the other side, the use of the method for stability and dimming of luminosity of lamps with the use of an electronic circuit as depicted on the waveform of figure 1(c) produces a constant, invariant output voltage, as regards both the width and the frequency, irrespective of the input supplied.

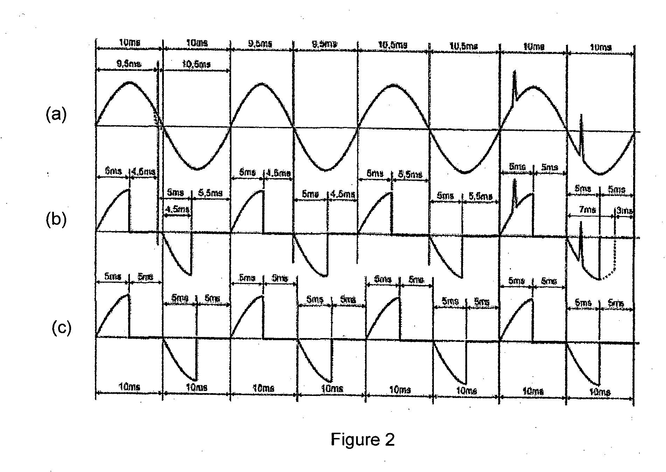

Various types of distortions, as well as how these affect a conventional dimmer are presented in the 2 first waveforms of figure 2, while in figure 2(c) the stability of the response of the proposed method is depicted. The waveform of figure 2(a) presents four different cases and the respective responses of a conventional dimmer on the waveform of the said figure, Figure 2(b). These cases are presented per period in the figure.

The first period is 20 ms with a frequency of 50 Hz and the problem is that a sine distortion near 0V of the period is shown. Such variations may be generated by connection to a high-load mains. In such cases, and upon connection, the mains voltage drops and if this drop is near to 0V, zero shifting is observed. The problem that arises is that the conventional dimmers synchronise the conduction angle by recognizing the 0V of the sine and keep the conduction angle for a time period depending on the control signal received by their input. For example, if the control signal is at 50% invariable, then the conduction angle is 5 ms at 50Hz. Since the mains voltage drop is near zero, the dimmer recognizes as semiperiod the 9.5 ms and not 10 ms which would normally be the case. Thus at the beginning of the conduction angle of the positive semiperiod, the dimmer output normally operation for 5 ms, according to the control signal, and thereafter it becomes zero waiting for the next elimination of the control signal. This however appears 0.5 ms earlier than when its should and thus the conventional dimmer begins to conduct by 0.5 ms earlier and thus stops respectively earlier. Therefore, the negative semi-period appears at the output for a period of 4.5 ms which is substantially as if the control signal has reduced from 50% to 45%, with a respective reduction in luminosity.

The second and third period of the 1^{st} waveform of figure 2 present an example of the instability in the mains frequency. In particular, the second period lasts 19ms whereas the third one lasts 21 ms. By controlling the waveform of the response of the conventional dimmer, as this is presented in figure 2(b), the following effect is observed. The semi-period of the mains is 9.5ms, whereas at 50Hz the conduction angle lasts 5ms. This means that the 5ms of the conduction angle, compared to the 9.5ms correspond to a percentage of 52.6%. Thus, the control signal has apparently changed, from 50% to 52.6%, thus the luminosity of the lamps is changed. Respectively, the third period lasts 21ms and thus the conduction angle of 5 ms corresponds to a semi-period time 10.5ms providing a percentage of 47.62%. Obviously, this change of the control signal influences the luminosity of the lamps, which thus flicker. In the fourth distortion presented in figure 2(a), a noisy mains is addressed. Such sudden changes in the voltage value are common on the supply mains. The two peaks on the waveform of the control signal, one for the positive semi-period and one for the negative semi-period, are transferred as noise to the lamps or the illumination bodies with LEDs via the conventional dimmers. Particularly interesting is the peak on the negative semi-period. As shown in figure 2(a), the voltage converts instantly from negative to positive. This means that the conventional dimmer may consider that the voltage elimination means the start of new cycle of conduction angle. Since however for example the conduction cycle has started 2ms before, the total cycle will last 7ms instead of 5ms. As a result, an intense flushing in luminosity will be observed, which may occur regularly if the mains contains intense noises. It is clear that a respective effect may be observed also in case when a negative peak is observed in the positive semi-period.

From the above it is concluded that the luminosity of the lamps and the illumination bodies with LEDs, which are connected at the output of a conventional dimmer, is unstable in all cases of instability in voltage and frequency of the mains and of noise. Thus irrespective of the type or form of the fluctuations appearing on the waveform of a mains and which could be transferred via a conventional dimmer on the illumination bodies with LEDs, the use of the method presented herein, as shown in figure 2(c), prevents an influence on the voltage features, thus the luminosity remains constant and a flickering of the lamps will be absent.

The basic idea of the method for stability and dimming of luminosity of lamps lies in that the alternating voltage with which the lamps and illumination bodies using LEDs are supplied should be an integrated circuit which will be able to produce a constant alternating voltage with constant frequency and free from any voltage peak. The circuit should modulate the waveform both by Forward Phase Control and by Reverse Phase Control, depending on the control signal, so that the luminosity is adjustable.

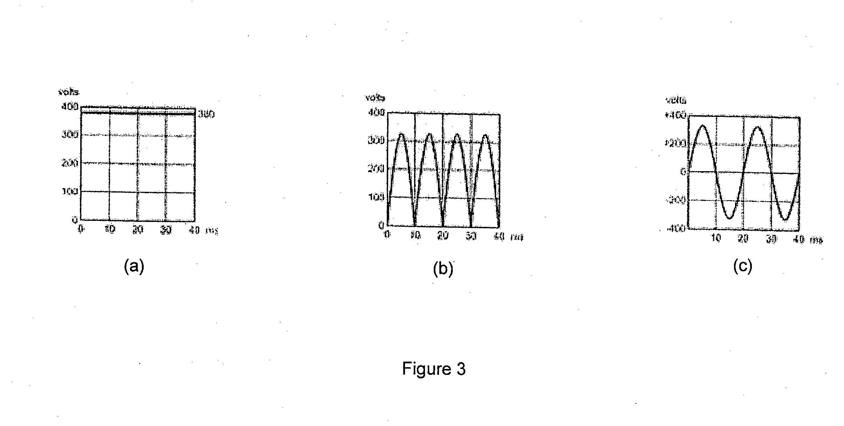

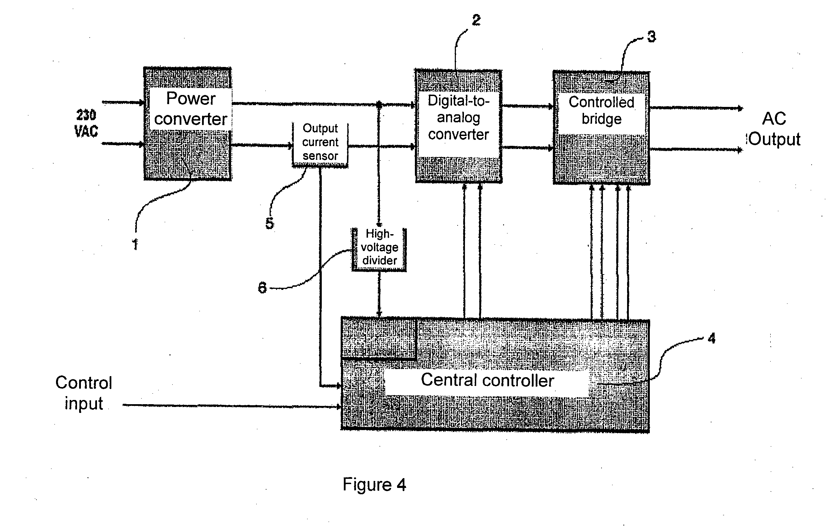

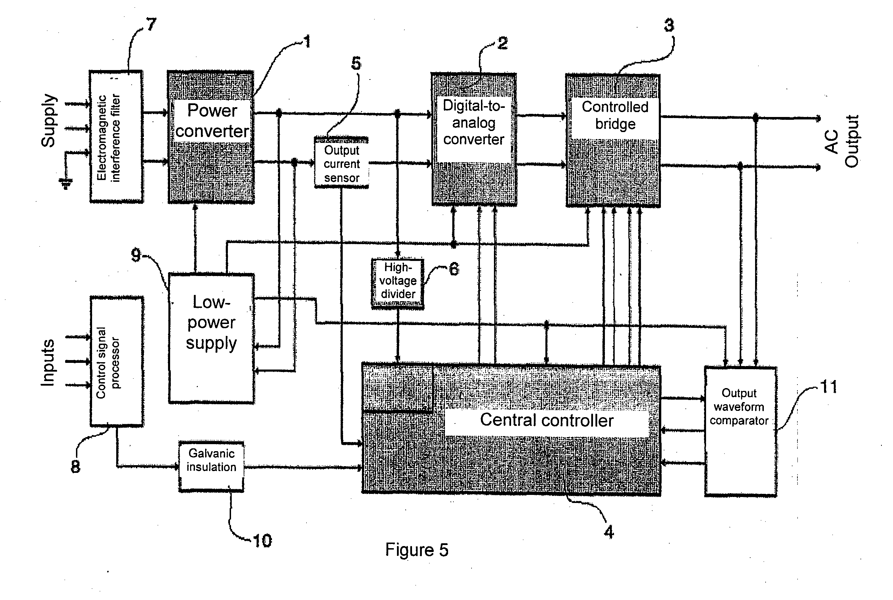

The stabilized alternating voltage, which is the main aim of the method described herein, is produced by four parts of electric circuits. In general, these contribute in that a constant voltage is generated which will be larger than the maximum value of the alternating voltage, exemplarily by 10-30%, figure 3(a), before the signal is converted from digital to analog for the generation of the positive sinusoidal form, figure 3(b). Thereafter, a controlled bridge is used which converts the previous positive sinusoidal waveform to an alternating voltage waveform, figure 3(c). At the same time, a central controller (4) with output current sensor (5) and high-voltage divider (6) is provided, which drives the digital-to-analog converter (2) as well as the controlled bridge (3), figure 4. The electronic parts are incorporated in a dimmer device designated as "Switch Mode Regulated Dimmer", as that of figure 5.

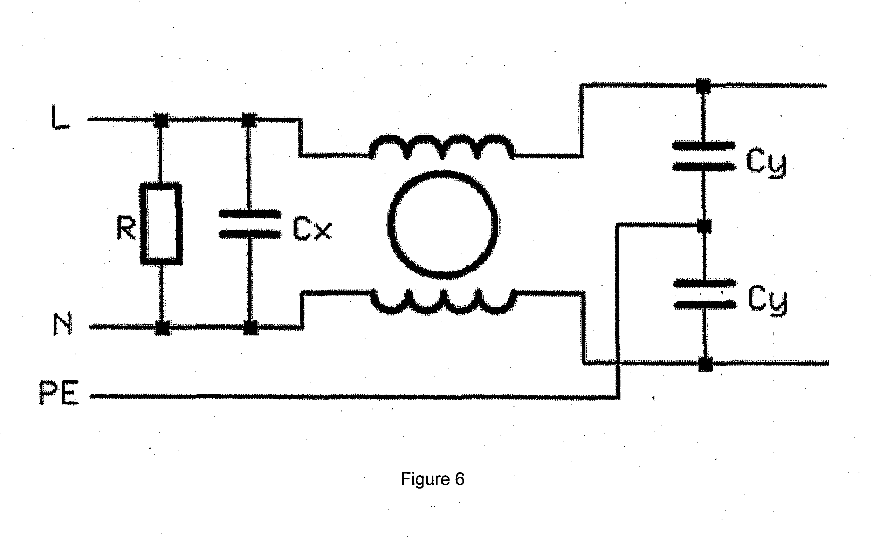

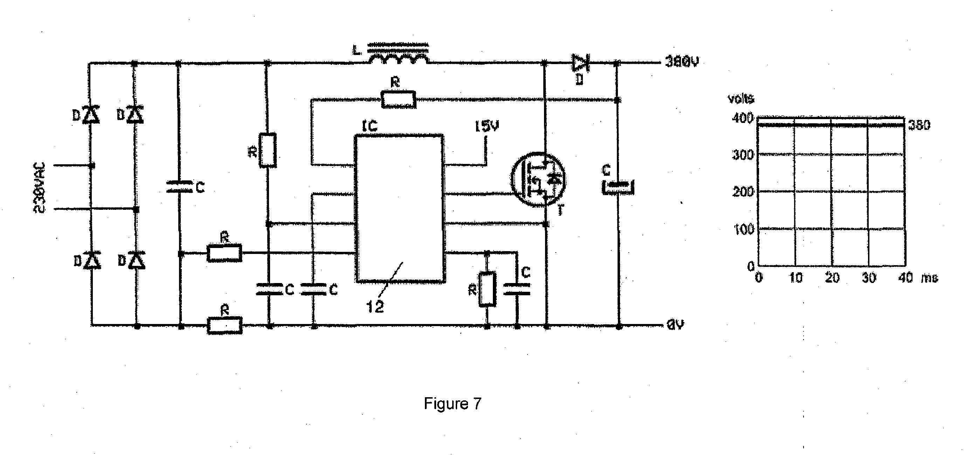

It is already known that each electronic circuit must conform to the EC directive 2004/108/EC, for the restriction of the contact electromagnetic emissions. Since these radiofrequencies may penetrate the mains via the supply cable, these should be below a certain limit, or otherwise will cause noise on the mains. For suppressing this noise, an electromagnetic-interference filter (7) is used, as it is shown in detail in figure 6, where the mains is connected to the phase (L), the neutral (N) and the ground (PE). The output of the circuit is provided to the remaining circuit, while the selection of the values of the elements is such that no noise is introduced in the remaining circuit via the supply cable. The supply from the electromagnetic interference filter (7) is guided to the AC/DC converter (1), figure 5, which converts the alternating voltage to direct one and in parallel increases it and corrects its power coefficient. This increase is exemplarily 10-30% of the maximum value of the output alternating voltage. Since the RMS value of the voltage is 230V, its maximum value will be 325.27V, since as known Vrms=V√2. Thus the direct voltage should be between 358V and 423V. For rectification an AC/DC converter circuit (1) is used, figure 7, which apart from the increase in voltage, corrects the power coefficient. This constitutes a major advantage, since until now the power coefficient of the most lamps with LEDs varies between 0.55 and 0.75.

To the input of the AC/DC converter (1), figure 7, the output of the electromagnetic interference filter (7) is connected, whereas at its output the direct voltage is obtained. The AC/DC converter comprises a controller (12), which is characterized by a continuous conduction operation, CCM, so that it provides more output power, 200-330W or above, since it absorbs significantly smaller currents so that the noise of the radiofrequencies produced is considerably smaller and thus these can be easier suppressed by the electromagnetic interference filter (7). Exemplarily, such a suitable controller would be the NCP1653 of the ON Semiconductors company, without being limited to it since any other suitable controller may also be used. The remaining electronic components, such as capacitors, resistors and coils of figure 7 are selected so that the desired voltage and output power are obtained and it is ensured that this direct voltage will remain constant for relatively large fluctuations in the supply voltage. For example, if an output voltage of the AC/DC converter (1) of 380V is desired, which corresponds to a value ca. 17% larger than the maximum output value of the dimmer, then this should remain constant for supply voltages from 150V AC to 265V AC. It is thus clear that AC/DC converter (1) also operates as a voltage prestabilization unit, before the final stabilization which occurs in the subsequent stages. Additionally, if the dimmer operates with the maximum load connected at is output, and after adjustment of the luminosity to the maximum value, the value of the power coefficient of the power converter (1) should be larger than 0.98.

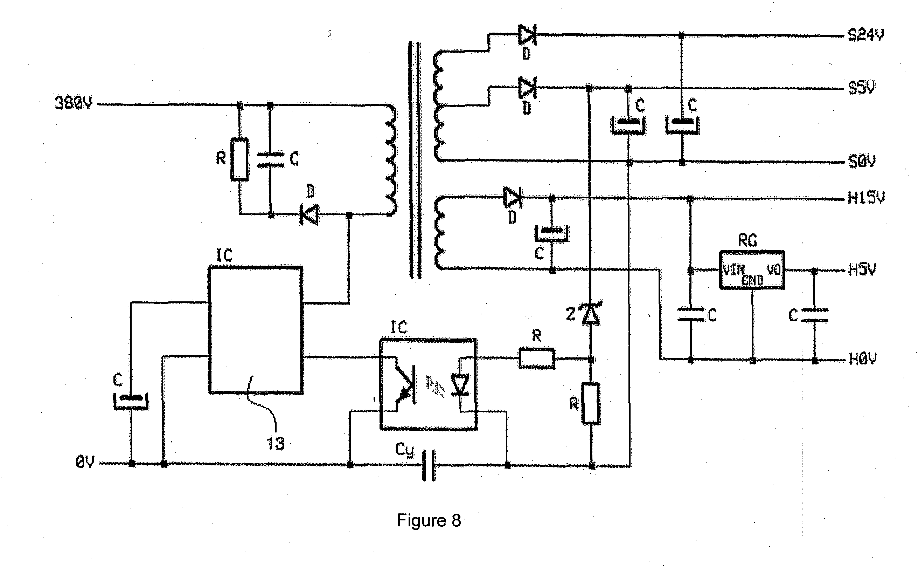

The presence of a low-power supply unit (9), figure 5, is necessary since the circuits of the most elements of the dimmer require a low operation voltage. The low-power supply unit (9) is connected to the output of the AC/DC converter (1) and is supplied by the 380V-direct voltage that this produces. Internally, it comprises a controller (13), figure 8, which may be for example a NCP1012 of the ON Semiconductor company, which is of the interrupted operation with flyback topology. At its output, it provides stabilized voltages H15V and H5V with reference point being the H0V for the active circuits, whereas in parallel the outputs S24V and S5V are provided with reference point being S0V, which are electrically isolated from the active circuits over 3kV. When reference is made to active circuits, these are the circuits which have a direct electric contact and not a contact with the mains voltage. The isolated voltages are used for the processor of the control signals (8), with which the user can come in contact, when for example he connects the bare control signal cable with the dimmer clamps.

A basic circuit for the operation of the method is the digital-to-analog converter (2), which generates a stabilized positive sinusoidal waveform, before this is converted to alternating in the final stage. The circuit is supplied with 380V-direct voltage from the output of the power converter (2), figure 5, whereas the 2 MOSFETs are driven by an integrated circuit (14), which receives the digital information from the central controller (4). As an example, the integrated circuit may be the NCP5106B of the ON Semiconductor company, without being limited to it since any other suitable circuit may be used.

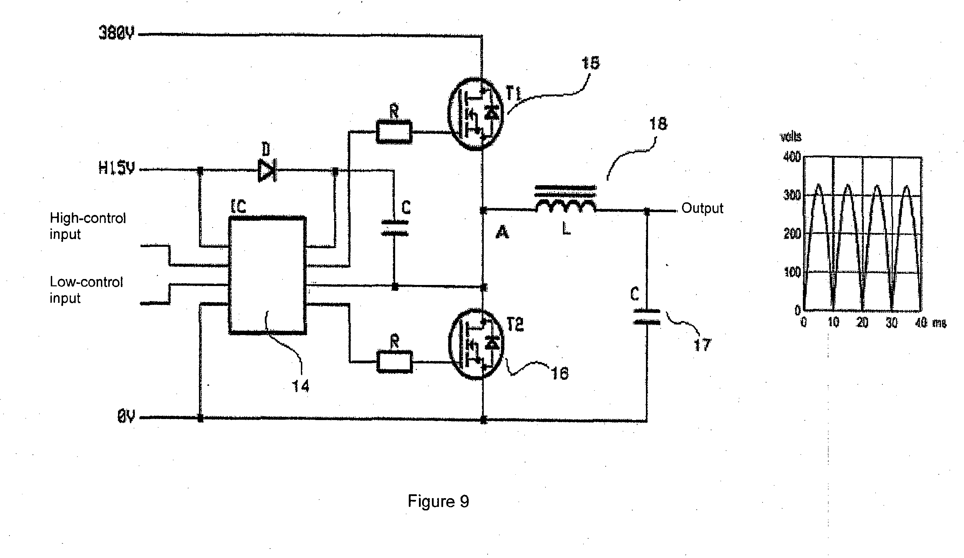

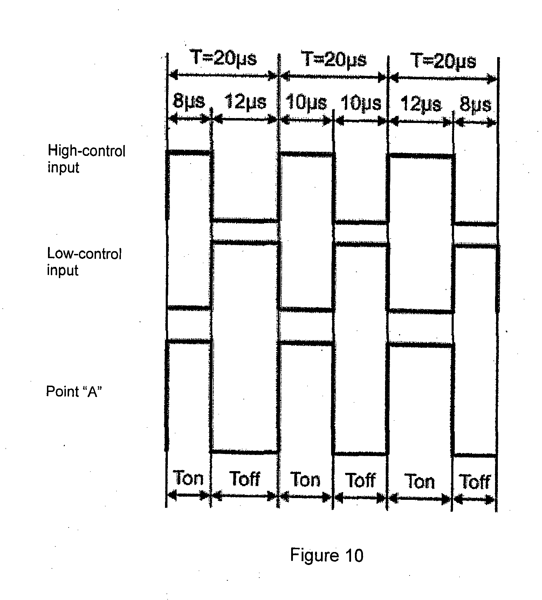

Referring to the operation, a description of how the waveforms of figure 10 are obtained, depending on the high-control and low-control inputs on the integrated circuit (14). The voltage value at point A, figure 9, is respectively shown. When the value of the high-control input is positive, the MOSFET (15) conducts and at point A the voltage of 380V is presented and at the same time the capacitor (17) at the output of the circuit is charged by means of the coil (18). When the high-control input now becomes 0V, the low-control input is positive and the MOSFET (15) stops to conduct, whereas the MOSFET (16) becomes conductive, initiating the discharging of the capacitor (17) at the circuit output. The time "T" held by this cycle is 20µs, which means that the pulse frequency is 50 kHz. The time point on which the point A is at 380V is designated as "Ton", whereas the time point on which the voltage at this point is equal to 0V is designated as "Toff". In order to obtain the desired voltage at the circuit output, it suffices to alter the time "Ton" while maintaining the time "T" constant, since the relation associating the output voltage with the "T" and "Ton" is Vout=(Ton/T)*Vref, wherein Vref is the reference voltage, i.e. 380V. Thus, exemplarily, when "Ton" = 8 µs, then Vout=(8/20)*380V = 152V, whereas when "Ton"=10 µs, then Vout=(10/20)*380V=190V. As a conclusion, when we alter the time "Ton" at a specific rate, we obtain a positive sinusoidal waveform which in a subsequent stage is converted to alternating one, which is final aim. The variation rate is determined by the central controller and is adjusted by it depending on the variation of the 380V-voltage, which is monitored via the high-voltage divider (6). Referring in detail to the digital information provided by the central controller (4), it should be mentioned that it is essentially a square pulse of constant frequency but variable width, so that at the output of the digital to analog converter (2), the desired voltage is obtained. Referring again to the above example, if the voltage is 380V and the maximum output voltage is 325.27V then the percentage of the pulse width will be 85.597%. Thus, when the pulse width is between 0% to 85.597%, at the output of the digital-to-analog converter (2) the voltage will be from 0V to 325.27V respectively, always with reference voltage at 380V. The output of the dimmer will have a voltage of 230VAC and a frequency of 50Hz. By splitting each semi-period of the alternating voltage to 512 parts, then the time will be 10ms/512 = 19.53125 µs, which corresponds to a frequency of 1/19.53125 µs = 51.2 kHz. Thus the frequency of the square pulse of variable range will be 51.2 KHz.

Based on the above, as the central controller (4) starts with a width percentage 0% and by increasing it per pulse, for the first 256 pulses, based on the sine, then at the 256^{th} pulse we will obtain a percentage of 85.597%, thus 325.27V. Respectively over the next 256 pulses, the reverse takes place, i.e. a reduction of the width percentage per pulse, based on the sine, ending to 0%, which means 0V voltage. With this rate, we will obtain at the output of the digital-to-analog converter (2) a positive sinusoidal waveform. The time of each positive sinusoidal waveform will be 512 pulses*19.53125 µs = 10 ms which corresponds to a 100Hz frequency.

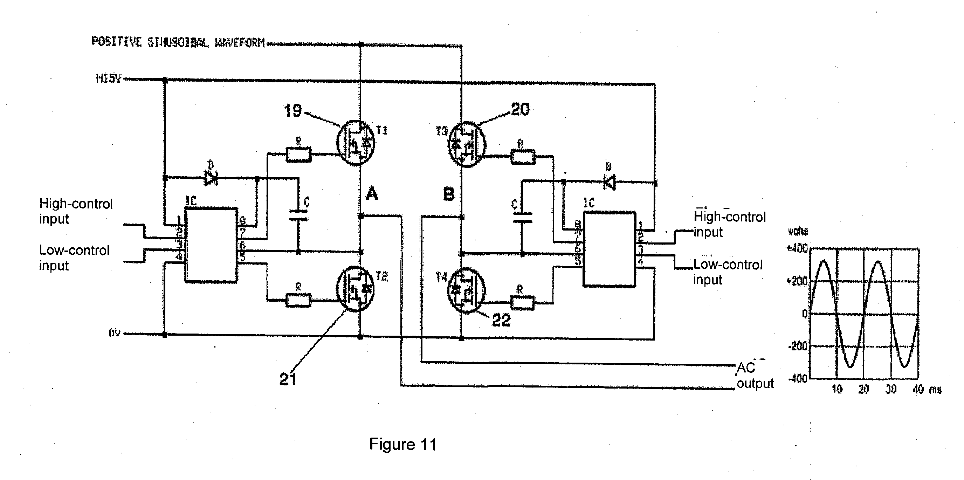

The positive sinusoidal waveform derived from the digital-to-analog converter (2) is guided to the input of the controlled bridge (3), so that it is converted to alternating one, figure 11. The controlled bridge (3) receives the control signals from the central controller (4), while in parallel it consists of four MOSFETs which are driven by two integrated circuits. Exemplarily, these may be the NCP5106B of the ON Semiconductor company. In order to have an alternating voltage at the output of the controlled bridge (3), the polarity of the points A and B of figure 11 should continuously alternate from + to - and vice versa.

The MOSFET (19), (20) are connected to the high potential, whereas respectively the MOSFET (21), (22) are connected to a potential equal to 0V. When the voltage of the sinusoidal waveform is at 0V, then the central controller (4) provides such signals so that the MOSFET (19) and (22) stop to conduct, thus the points "A" and "B" of figure 11 will have a positive and a negative polarity respectively. At the next 0V of the sinusoidal waveform the central controller (4) will again provides a signal so that MOSFET (19) and (22) stop to conduct whereas the MOSFET (20) and (21) become conductive. By this procedure, which will continue in this manner, when 0V is on the waveform, the polarity of the points "A" and "B" will reverse. Thus at the output of the dimmer the desired, constant -as regards fluctuations- alternating voltage will be obtained. By changing the polarity every 10ms, at the output a positive waveform will be obtained for 10ms, a negative for the next 10ms etc. As a result, the time of one period including a negative and a positive waveform will be 20 ms, which corresponds to a 50Hz-frequency.

Additionally, an output current sensor (5) is also provided, the sensor being connected to the central controller (4) and operating so that when the output current exceeds a certain predetermined limit it activates the central controller (4) and interrupts the output voltage. This limit depends on the output power and exemplarily when the output power is 20W, on a circuit operating at 240V, the current will be ca. 0.87A. The central controller (4) waits for a predetermined time period before it attempts to reactivate the output. If it does not receive a signal from the output current sensor for excess current, it continues its operation, or otherwise it repeats the procedure from the beginning. Furthermore, since the output waveform is generated by electronic circuits, it should be ensured that the output will be continuously of the appropriate form and width. This is achieved by the use of an output waveform comparator (11) which is controlled by the central controller (4). This continuously provides to the comparator an analog reference signal similar to the signal of the predicted output waveform. Since at the same time, the output waveform comparator (11) is connected to the output of the dimmer it also has the real output signal every time moment. By comparing these 2 signals, their difference can be recognized any time and the central controller (4) can be informed, which controller directly interrupts the digital signal on the digital-to-analog converter (2) and thus the output voltage is interrupted immediately.

Additionally, we will refer to the processor of the control signals (8), which receives one or more control signals which the dimmer obtains. For example, the dimmer may have a digital input to receive a DMX-512 signal while in parallel it may have an analog signal input 0/10V. The central controller (4) however has a digital serial input via which it must receive the information from both inputs of the dimmer. Therefore, the processor of the control signals (8) is provided, which processes the information of all the inputs of the dimmer and sends it serially to the central processor (4). The central processor (4) is essentially one of the most vital parts for the proper operation of the method described herein. It is the component which monitors, controls and synchronizes all the operations of the circuits. Its basic operation is to process the information it receives from the processor of the control signals (8) and to send the suitable digital information to the individual circuits so that a stabilized, alternating voltage waveform is generated by the method described above. Additionally, it should monitor if the output currents exceed a limit- and control the features of the output waveform. Exemplarily such a suitable controller is the AT90PWM3B of the ATMEL company. Since now the central controller (4) belongs to the high-voltage circuits, i.e. to the active circuits, the control signals should be electrically isolated for safety reasons. Therefore, the galvanic insulation of the control inputs (10), figure 5, of the serial signal, which is between the control signal processor (8) and the central controller (4), is used. Another problem which the central controller (4) addresses relates to the waving of the voltage depending on the load variations. As previously mentioned exemplarily, the positive sinusoidal waveform is generated by having 380V as reference voltage. However, this voltage cannot be constant due to the load, the higher the load, the larger the waving it presents and the higher the voltage drop. Thus, when the reference voltage is 380V, the voltage may actually reach, without load, 390V, whereas with load its value may drop to 370V. Thus the output of the digital-to-analog converter (2) may be 390V*85.597%=333.8V or in other cases 370V*85.597%=316,7V, which means instability at the output of the dimmer.

In order to solve the problem, the central controller (4) controls the direct voltage of 380V and modulates the width percentage of the digital pulse, so that at the output of the digital-to-analog converter (2) the voltage will be constant. At first, the 380V are guided to a voltage divider (6), figure 5, which by the use of resistors reduces the voltage value to limits in which it can be converted to digital form and processed by the central controller (4).

A part of the direct voltage which is determined by the voltage divider (6) is conveyed to the central controller (4), where it is converted to a digital form and the percentage of the decrease or increase of the direct voltage in relation to the respective digital form of the conversion of 380V is calculated. For example, suppose that the theoretical voltage of 380V has dropped by 2%, i.e. at 372.4V. The central controller (4) calculates the difference and determines that the width percentage of the digital signal which the circuit of the digital-to-analog converter (2) should increase by 2.04%. Thus, we have 380V*85.587% = 325.27V, in the theoretical case when the direct voltage is 380V. If now a voltage drop of 2% occurs, then 372.4V*85.597% = 318.76V. Immediately, the central controller (4) modulates suitably the percentage depending on the voltage, converting it to 85.597%*1.0204% = 87.343%, so that the voltage is returned to 325.27V, which is the intended value. Similarly, if the direct voltage is increased by 2%, i.e. to 387.6V, the central controller (4) calculates the percentage of the required reduction, which in this case is 1.96%, so that its coefficient is corrected, 85.597%, and the voltage value returns to the intended, constant levels.

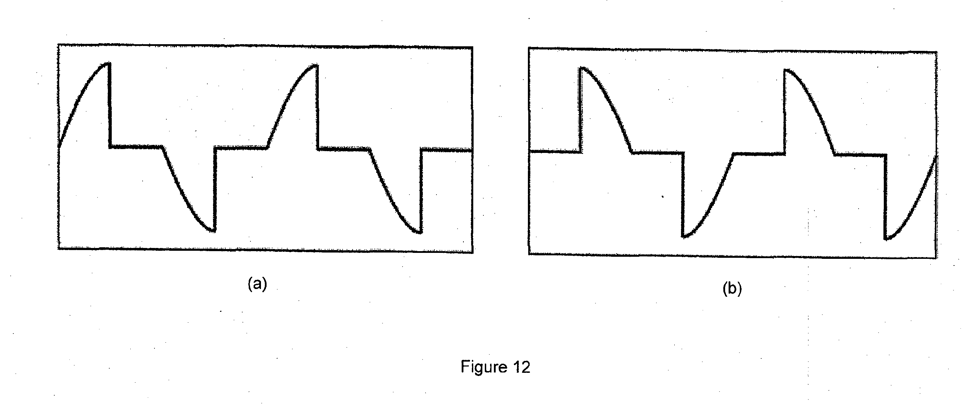

The method presented herein allows the adjustment of the luminosity of the lamps and other illumination bodies with LED in two ways, depending on the user's selection and on how the loads are adjusted. One way is the method known as "reverse phase control" (following edge dimmer), figure 12a, while the other one is known as "forward phase control" (leading edge dimmer), figure 12(b). The digital control signal that is input in the central processor (4) contains the level that the output of the dimmer should have. These levels are 512, i.e. the same number as the number of the parts of the semi-period of the output, i.e. the first level corresponds to 0V output, and the level 512 corresponds to 230V output, i.e. to the maximum output voltage.

When the "reverse phase control" adjustment is selected, we exemplarily consider that the level of the control signal is 256, i.e. 50%. The pulse of the first part of each semi-period has a width percentage 0%, which is sinusoidally increased until the pulse 256 and then is sinusoidally reduced until the pulse 512. However, for the specific adjustment, the central controller (4), before each sinusoidal increase or decrease of the width percentage of the pulse sent to the digital-to-analog converter (2), compares the level of the control signal with the value of the instant part of the semi-period present at that moment. If the level of the signal is higher or equal to the value of the instant part of the semi-period, then the pulse receives the subsequent sinusoidal percentage. If the signal level is smaller, then the pulse obtains 0% percentage.

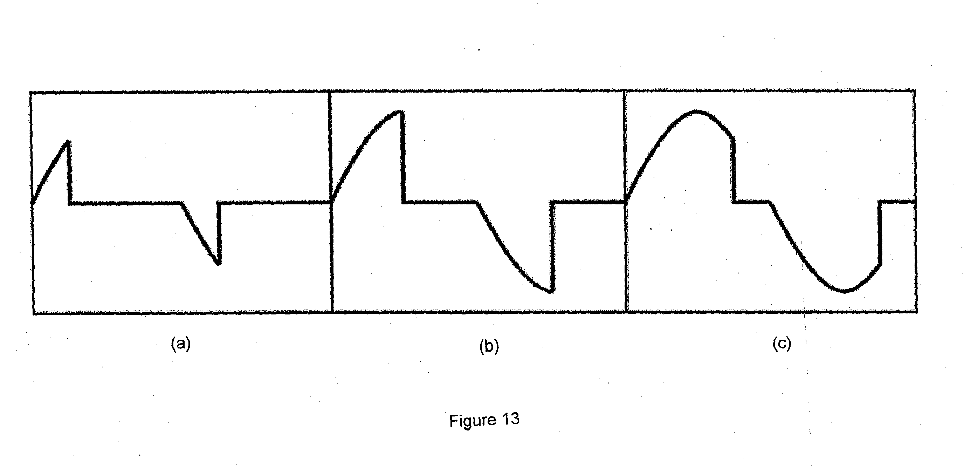

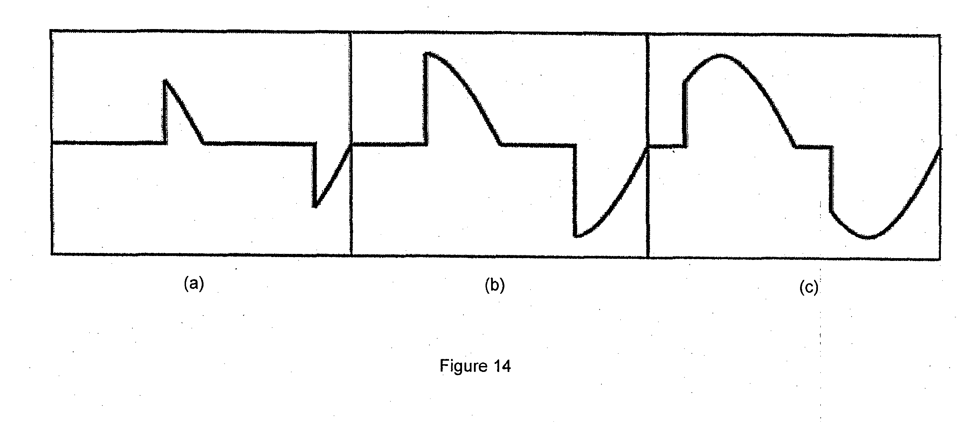

Thus, in the example used herein, since the signal level is 256, the pulse acquires the sinusoidal percentage until the part 256 and from the part 257 to the part 512 the percentage becomes 0%. If the levels of the control signals have values 128, 256 and 384, then at the output of the dimmer the waveforms will be respectively those of figures 13(a), (b), (c). If now, the "forward phase control" adjustment (leading edge dimmer) is applied, the level of the control signal does not control when, during a semi-period, the waveform is eliminated but when this starts. The central controller (4) thus reverses the level of the control signal, subtracting the signal level from the number 513. Thus, when the control signal level is 1, it becomes 512 and when it is 512 it becomes 1. When the signal level is larger than the value of the instant part of the semi-period then the pulse which is sent to the digital-to-analog converter (2) obtains a percentage 0%. When however we have a reversed signal level, equal or smaller than the value of the instant part of the semi-period, then the pulse obtains the next sinusoidal percentage. For example, if we have control signal levels with values, not reversed, which are equal to 128, 256 and 384, at the output of the dimmer, waveforms as those of figures 14(a), (b), (c) are obtained. It should be noted that the description of the invention was made with reference to an exemplary, non-limiting embodiment. Apparently, the produced voltage may be of any width between 10Vrms and 240Vrms and of frequency between 35 to 65 cycles, depending on the structure of the electronic circuit to be used, while he energy for the electronic circuit producing the alternating voltage may be derived from any energy source, the control signal for the waveform modulation may be of any form, for example analog of positive or negative voltage, pulsed, serial of various protocols. Obviously, we will obtain various output power values, output voltage values, while the frequency of the output alternating voltage, the supply voltage and the splitting of the semi-period to parts more or less than the exemplary mentioned may also vary, so that a higher adjustment resolution may be obtained or more cost-effective electronics may also be used.

Any change or modification regarding the shape, size, dimensions, manufacturing and assembly materials and components used, application fields, as long as not constituting a new inventive step and not contributing to the already known art, are considered within the scope of the present invention.

## Claims

1. Method for stability and dimming of luminosity of lamps and illumination bodies with LED elements, **characterized in that** at its output it provides a constant, alternating sinusoidal voltage, which is derived from the conversion of the mains voltage from alternating to direct, its rectification and the conversion of the obtained digital signal to analog one, after removal of the noise of the mains, whereas the stabilized positive sinusoidal waveform is finally converted to alternating sinusoidal one at the output.

2. Method for stability and dimming of luminosity of lamps and illumination bodies with LED elements, according to claim 1, **characterized in that** it is executed by the use of an electronic integrated AC/DC converter circuit (1), a digital-to-analog converter (2), a controlled bridge (3) which perform the conversion of the mains waveform to constant alternating sinusoidal voltage at the output of the circuit and which are controlled by a central controller (4).

3. Method for stability and dimming of luminosity of lamps and illumination bodies with LED elements, according to claim 1, **characterized in that** the central controller (4) is connected to an output current sensor (5), which intervenes when it receives a signal that the voltage at the output has exceeded certain limits, whereas it is also connected to a comparator of the output waveform (11), which compares a reference analog signal with the real signal at the output of the dimmer for differences, its connection with the processor of the input signals (8) being effected via a galvanic insulation (10), so that the necessary electric protection is achieved.

4. Method for stability and dimming of luminosity of lamps and illumination bodies with LED elements, according to claim 1, **characterized in that** it allows the adjustment of the load by "reverse phase control", where the central controller (4) before each sinusoidal increase or decrease of the width percentage of the pulse which it sends to the digital-to-analog converter (2) compares the level of the control signal with the value of the instant part of the semi-period present at that time moment, and if the signal level is larger or equal to the value of the instant part of the semi-period, then the pulse obtains the subsequent sinusoidal percentage, or otherwise the pulse receives a percentage of 0%.

5. Method for stability and dimming of luminosity of lamps and illumination bodies with LED elements, according to claim 1, **characterized in that** it allows the adjustment of the loads with "forward phase control", so that when the reversed signal level is equal or lower than the value of the instant part of the semi-period, then the pulse acquires the next sinusoidal percentage, otherwise the pulse sent to the digital-to-analog converter (2) acquires a percentage of 0%.
